# EUROPÄISCHE PATENTSCHRIFT

(11) **EP 4 379 492 B1**
(45) Veröffentlichungstag und Bekanntmachung des Hinweises auf die Patenterteilung: **10.09.2025**
(21) Anmeldenummer: 23213461.9
(22) Anmeldetag: 30.11.2023
(51) Int. Cl.: G05D 7/01

(54) **VOLUMENSTROMREGLER**
VOLUME FLOW REGULATOR
RÉGULATEUR DE DÉBIT VOLUMIQUE

(30) Priorität: 30.11.2022 DE 102022131713; 29.11.2023 DE 102023133444
(43) Veröffentlichungstag der Anmeldung: 05.06.2024
(73) Patentinhaber: Schako KG, 78600 Kolbingen (DE)
(72) Erfinder: MÜLLER, Dr., Rainer, 78600 Kolbingen (DE)
(74) Vertreter: Patentanwälte und Rechtsanwalt Weiß, Arat & Partner mbB

(56) Entgegenhaltungen:
- EP-B1- 2 993 422
- AT-B- 393 899
- DE-U1- 202004 003 811

## Beschreibung

### Technisches Gebiet

Die Erfindung betrifft einen Volumenstromregler nach dem Oberbegriff des Anspruchs 1.

### Stand der Technik

Derartige als Volumenstromregler oder Vorrichtungen zum Regeln des Volumens eines strömenden Mediums in einem Kanal bezeichnete Vorrichtungen sind in vielfältiger Form und Ausführung auf dem Markt und zum Teil auch sehr aufwendig aufgebaut und benötigen damit eine präzise Justierung bei deren Montage. Die Regelklappe kann nicht einmal festgelegt werden, sondern muss sich im strömenden Medium, insbesondere in Luft, bewegen und der Menge des strömenden Mediums anpassen können. Dabei ist zu bedenken, dass sich derartige Klappen meist an sehr unzugänglichen Orten befinden, so dass sie, falls notwendig auf einfache Art und Weise verstellt werden müssen.

In der DE 100 14 901 C2 ist bspw. ein Volumenstromregler mit einer in ein Kanalstück ragenden und mittels einer Schwenkwelle mit einem Hebelarm drehbaren Klappe bekannt, wobei an dem Hebelarm eine von einem Federsystem einer Klappenrückstellmimik erzeugte Federkraft angreift. Das Federsystem besteht aus einer Blattfeder oder einem Blattfederpaket, dessen eine Ende ortsfest, aber drehbar befestigt ist und dessen anderes Ende eine Federkraft auf die Klappe überträgt. Vorgesehen ist ferner eine Krafterzeugungseinrichtung zum Erzeugen einer lediglich an einer Stelle der Blattfeder angreifenden Kraft zum Durchbiegen der Blattfeder zwischen ihren beiden Enden sowie eine Fixiereinrichtung zum Fixieren der Durchbiegung der Blattfeder.

Des Weiteren ist aus der EP 1 840 477 B1 eine Regelklappe für einen Volumenstromregler bekannt, bei der eine entsprechende einstellbare Feder über ein Verbindungselement mit dem Klappenblatt verbunden ist.

Die EP 2 993 422 B1 beschreibt einen Volumenstromregler, bei dem das Klappenblatt mit einer Biegefeder gekoppelt ist, so dass die Bewegung des Klappenblattes eine Bewegung der Biegefeder bewirkt. Ferner ist ein Einstellelement vorgesehen, das einen Anschlag für die Biegefeder bildet. Dieses Einstellelement ist ein Ausleger, der an einem Ende einstellbar gehalten ist und dessen anderes Ende die Form einer Klinge hat, die den Anschlag für die Biegefeder bildet und bei fortgesetzter Bewegung der Biegefeder an dieser entlang gleitet.

In diesem Zusammenhang wird außerdem auf die DE 20 2004 003 811 U1 hingewiesen. Dort ist ein Volumenstromregler, insbesondere für klima- und lüftungstechnische Anlagen offenbart, mit einer im Inneren eines Strömungskanals auf einer quer zur Strömungsrichtung angeordneten Welle schwenkbar gelagerten Regelklappe und mit einem die Offenstellung der Regelklappe begrenzenden Anschlag, wobei die Regelklappe unter Einwirkung eines die Regelklappe anströmenden Mediums gegen eine durch eine Rückstelleinrichtung erzeugte Rückstellkraft aus der Offenstellung in eine Schließstellung verschwenkbar ist und bei sich verringerndem Volumenstrom durch die Rückstellkraft wieder in die Offenstellung zurückverschwenkt wird, wobei der Anschlag zur Veränderung des in der Offenstellung des Regelklappe strömenden Volumenstroms in seiner relativen Lage zur Welle veränderbar und mittels einer Fixiereinrichtung in seiner Position fixierbar ist, und dass die Rückstelleinrichtung mit dem Anschlag derart verbunden, insbesondere an dem Anschlag derart angebracht ist, dass die Federcharakteristik bei Veränderung der relativen Lage des Anschlags im Wesentlichen unverändert ist.

Der Vollständigkeit halber wird auf die AT 393 899 B hingewiesen. Dort ist eine Vorrichtung zur Regelung des Volumenstromes bzw. des Druckes für raumlufttechnische Anlagen beschrieben, Dabei bewirkt eine Vorrichtung die Übertragung einer Drehmomentfunktion in Abhängigkeit des Klapperwinkels auf eine Klappenwelle. Die Vorrichtung besteht im Wesentlichen aus einer auf der Welle der Klappe zusätzlich befestigten Kurvenscheibe. Daran ist ein Zugseil mit einem Ende befestigt, während das andere Ende des Zugseils mit dem freien Ende einer Biegefeder verbunden ist. Die Biegefeder ist dagegen mit einem Ende ortsfest eingespannt, wobei ein über die Länge der Biegefeder verschiebbares Spannelement die verbiegbare Länge der Biegefeder beeinflusst.

### Aufgabe der Erfindung

Die Aufgabe der vorliegenden Erfindung ist es, eine sehr einfache aber wirkungsvoll arbeitende Einstellvorrichtung für ein Klappenblatt in einem Volumenstromregler aufzuzeigen.

### Lösung der Aufgabe

### Zur Lösung der Aufgabe führen die Merkmale aus Anspruch 1

Der erfindungsgemäße Volumenstromregler weist einen Kanal und einer Regelklappe auf, wobei die Regelklappe in dem Kanal schwenkbar um eine Querachse angeordnet ist, wobei die Querachse über eine Feder vorgehaltert ist. Dabei ist wesentlich, dass der Kanal einends ein Gegenlagergehäuse mittels eines Gegenlagerdeckels und andernends in ein Federlagergehäuse mittels eine Federlagerdeckels aufweist, wobei in dem Federlagergehäuse eine Federkraft-Regelungsmechanik angeordnet ist, wobei die Querachse einen Druckhebel ausbildet, welcher mittels eines Kraftüberträger-Pins auf eine Blattfeder der Federkraft-Regelungsmechanik anliegend angeordnet ist, wobei die Federkraft-Regelungsmechanik manuell verstellbar in dem Federlagergehäuse angeordnet ist.

Vorteilhaft ist hierbei, dass die Federkraft-Regelungsmechanik mittels des Druckhebels manuell derart eingestellt werden kann, dass der Kraftüberträger-Pin durch die Federkraft-Regelungsmechanik entlang der Blattfeder positionsverstellbar ist. Dadurch wiederum dass die Blattfeder eine von einem Haltebereich weg verjüngende Form aufweist, wird erreicht, dass die Federkraft stärker ist, je näher man mittels des Kraftüberträger-Pins an dem Haltebereich der Blattfeder ansetzt. Setzt man den Kraftüberträger-Pin weiter entfernt von dem Haltebereich an, so ist die Federkraft entsprechend schwächer. Entsprechend muss auch das anströmende Medium an der Regelklappe eine stärkere oder schwächere Hürde passieren.

Wenn die Federkraft, welche durch den Kraftüberträger-Pin mittels der Blattfeder übertragen worden ist, besonders hoch ist, ist die Regelklappe so gestellt, dass sie den Querschnitt des Kanals im Wesentlichen freigibt. Das bedeutet im Umkehrschluss, dass das durch den Kanal strömende Medium nicht beeinträchtigt wird. Ist die Federkraft schwächer eingestellt, so ist der Querschnitt des Kanals im Wesentlichen durch die Regelklappe verdeckt, wobei das durchströmende Medium nur eine schwächere Federkraft überwinden muss.

Um die Kraftübertragung von der Blattfeder auf die Querachse der Regelklappe zu erreichen, ist der Druckhebel radial zu der Querachse ausgebildet und der Druckhebel wiederum bildet axial versetzt zu der Querachse den Kraftüberträger-Pin aus. Dadurch entsteht einends der Querachse eine Kurbelform, die funktional einstückig oder mehrteilig über ein Gestänge in die Querachse der Regelklappe übergeht. Das erleichtert die Auslegung der Federkraft mittels der notwendigen Verstellwege in dem Federlagergehäuse.

Die Federkraft-Regelungsmechanik besteht in erster Linie aus einem Niederhalter und einem Grundkörper, wobei die Blattfeder in Ausgangslage parallel bis fast-parallel zu dem Niederhalter und dabei zwischen dem Niederhalter und dem Grundkörper angeordnet ist. In Ausgangslage bedeutet in diesem Zusammenhang, vor dem Einbau der Federkraft-Regelungsmechanik in das Federlagergehäuse.

Der Kraftüberträger-Pin ist in Gebrauchslage, also nach dem Einbau der Federkraft-Regelungsmechanik in das Federlagergehäuse zwischen der Blattfeder und dem Niederhalter angeordnet ist. Positionsverstellbar bedeutet in diesem Zusammenhang, dass der Kraftüberträger-Pin entlang der Blattfeder zwischen der Blattfeder und dem Niederhalter hin zu einem Haltebereich der Blattfeder oder weg von dem Haltebereich der Blattfeder positionsverstellbar ist, womit die Position der Regelklappe in dem Kanal mit der dazu vorher festgelegten Federkraft vorgehaltert ist.

Der Grundkörper weist einerseits einen Verstellerhebel und anderseits eine Kanalnut-Feder auf, wobei der Verstellerhebel durch eine teilkreisförmige Ausnehmung des Federlagerdeckels greift und die Kanalnut-Feder in eine teilkreisförmige Kanalnut auf einer Aussenseite des Kanals in dem Federlagergehäuse greift. Dadurch gewährleistet der Grundkörper, dass mittels des Verstellerhebels eine Positionierung der Federkraft-Regelungsmechanik erfolgt, die wiederum in Abhängigkeit der Position zu dem Kanal eine Justage der Regelungsklappe mit voreingestellter Federkraft ermöglicht.

Dazu bildet der Grundkörper zusätzlich auf seiner zu der Blattfeder weisenden Stirnfläche einen Federanschlagbogen aus. Der Federanschlagbogen ist dabei derart ausgebildet, dass er beim Ansetzen des Kraftüberträger-Pins nahe des Haltebereichs der Blattfeder anliegt oder fast an der Blattfeder anliegt. Dies ergibt sich aus dem Umstand, dass die Blattfeder beim Ansetzen an dieser Stelle durch den Kraftüberträger-Pin nicht oder nur wenig nachgibt und entsprechend auch nur wenig unterstützt werden muss, um ein Brechen oder Überdehnen der Blattfeder zu verhindern. Anders verhält es sich, wenn der Kraftüberträger-Pin möglichst weit weg von dem Haltebereich der Blattfeder ansetzt und die Blattfeder nur geringe Federkraft entgegensetzt. Durch den in Ausgangslage abfallenden Federanschlagbogen wird bei geringer Federkraftwirkung ein stärkeres nachgeben der Blattfeder unterstützt und gleichzeitig auch in dieser Position ein Überdehnen oder Brechen der Blattfeder verhindert.

Der Grundkörper bildet ausserdem einen verjüngt verlaufenden Rasterarm aus, wobei der Rasterarm mit einer Rastierung auf einer Innenseite des Federlagerdeckels zusammenwirkt. Dies erfolgt mittels einer Rasterhebung, die sich am Rasterarm parallel zum Verstellerhebel von dem Grundkörper weg erstreckt. Dies erleichtert eine bessere und einfachere Verstellung der Federkraft-Regelungsmechanik.

Andernends bildet der Kanal ein Gegenlagergehäuse mittels eines Gegenlagerdeckels aus. **In** dem Gegenlagergehäuse ist andernends der Querachse ein Zahnrad vorhanden, welches drehfest mit der Querachse verbunden ist. Drehfest bedeutet, dass jede Schwenkbewegung der Querachse unmittelbar auf das Zahnrad wirkt und ebenfalls eine Rotationsbewegung des Zahnrads auslöst.

Das Zahnrad wiederum greift in dem Gegenlagergehäuse in ein zweites Zahnrad greift, wobei das zweite Zahnrad auf einen Rotationsdämpfer aufgesetzt ist. Der Rotationsdämpfer wiederum ist mit der Aussenfläche des Kanals im Bereich des Gegenlagergehäuses verbunden und erlaubt zum Einen das freie Drehen des zweiten Zahnrads und zum Anderen verhindert es jegliche Klappergeräusche bei der Verstellung der Regelklappe oder beim Auftreffen des Mediums in dem Kanal auf die Regelklappe.

Das Zahnrad oder das zweite Zahnrad sind mittels eines Verriegelungshebels freigebbar oder drehverriegelbar, wobei der Verriegelungshebe durch einen Ausschnitt des Gegenlagerdeckels greift. Die Verriegelung erfolgt durch Eingreifen einer Sperre des Verriegelungshebels in das Zahnrad oder das zweite Zahnrad. Dabei ist die Freigabe oder Sperre mittels des aus dem Gegenlagerdeckels ragenden Teils der Verriegelungshebels möglich.

Die Regelklappe weist einen Knick in Strömungsrichtung auf. Dies hat vorteilhaft zur Folge, dass ein besseres Ansprechen an das durchströmende Medium erreicht wird und selbst kleinste Unterschiede im durchströmenden Volumen aufgenommen und daurch in gewünschter Form eingestellt werden.

Entgegen dem Stand der Technik besteht somit die vorliegende Erfindung nur noch aus einem mit der Regelklappe gekoppelten Druckelement, welches auf eine Feder drückt. Bevorzugt wird, dass das Hebelchen über ein einfaches Gestänge mit der Regelklappe verbunden ist, so dass eine direkte Übertragung der Bewegung der Regelklappe auf die Feder erfolgt. Im bevorzugten Ausführungsbeispiel geschieht die Verbindung des Gestänges mit der Regelklappe von Aussen, wobei ein Stift an dem Gestänge durch das Kanalgehäuse in eine Hülse in der Querachse der Regelklappe eingeschoben wird.

Zur Festlegung der Feder an einem Ende der Feder ist bevorzugt ein Verstellblock vorgesehen, der zur Verstellung der Spannung der Feder entweder um eine Achse drehbar oder entlang dem Gehäuse des Volumenstromreglers verschiebbar ist, so dass sich eine Distanz von Verstellblock zu Hebelchen vergrössert oder verkleinert.

Dieser Verstellblock weist bevorzugt eine Rundung auf, die zusammen mit einem Niederhalter einen Spalt ausbildet, der das zu fixierende Ende der Feder in sich aufnimmt. Wird der Verstellblock gedreht, kann sich die Feder der Rundung des Verstellblocks anpassen und so eine Spannung für den Hebel und für die Drehung der Regelklappe verändern.

In einem bevorzugten Ausführungsbeispiel ist der Verstellblock zusammen mit dem Niederhalter einstückig ausgebildet.

Ferner ist in einem Ausführungsbeispiel der Erfindung auch vorgesehen, dass der Regelklappe ein Dämpfungselement zugeordnet ist. Beispielsweise kann dieses Dämpfungselement ein separater Luftsack od. dgl. sein.

Die Vorrichtung zum Regeln des Volumens eines strömenden Mediums in einem Kanal mit einer Regelklappe, die in dem Kanal drehbar um eine Querachse angeordnet ist und dabei die Drehbarkeit durch eine Regeleinheit bestimmbar ist, die eine Feder aufweist, die sich wiederum gegen ein der Regelklappe zugeordnetes Druckelement abstützt, weist die Besonderheit auf, dass das Druckelement ein versetzt zur Querachse angeordnetes Hebelchen aufweist, welches beim Drehen der Regelklappe entlang der Feder gleitet.

Weiter ist das Hebelchen über ein Gestänge mit der Querachse der Regelklappe verbunden. Das Gestänge wiederum ist von außerhalb des Kanals auf die Querachse aufgesetzt oder als fortlaufende Verlängerung der Querachse ausgebildet. Dabei kann die Querachse eine Hülse zur Aufnahme eines Stiftes des Gestänges aufweisen.

Dabei kann der Stift über ein Schwert mit dem Hebelchen verbunden sein. Die Feder ist wiederum einem Verstellblock aufgesetzt ist, der mit einer Rundung die Feder untergreift.

Das Hebelchen wiederum wird von einem Niederhalter (11) übergriffen ist. Der Niederhalter ist einstückig mit dem Verstellblock und mit der Rundung hergestellt, wobei der Niederhalter zur Rundung einen Spalt zur Aufnahme der Feder ausbildet. Der Verstellblock ist zur Regelung der Spannung der Feder um eine Achse drehbar oder entlang dem Gehäuse verschiebbar. Dabei ist der Regelklappe ein Dämpfungselement zugeordnet.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine Schrägansicht von schräg oben auf einen erfindungsgemässen Volumenstromregler;
- Figur 2: eine Explosionsdarstellung der Figur 1;
- Figur 3: eine Ansicht auf eine Blattfeder 9;
- Figur 4: eine teilweise durchsichtige Darstellung einer Seitenansicht der Figur 1;
- Figur 5: eine geöffnete Seitenansicht eines Gegenlagergehäuses;
- Figur 6: eine vergrösserte Seitenansicht des Federlagergehäuses;
- Figur 7: eine geöffnete Seitenansicht des Federlagergehäuses aus Figur 6;
- Figur 8: eine Innenansicht eines Federlagerdeckels 6;
- Figur 9: eine erste Seitenansicht einer Federkraft-Regelungsmechanik 7;
- Figur 10: eine zweite Seitenansicht der Federkraft-Regelungsmechanik 7;

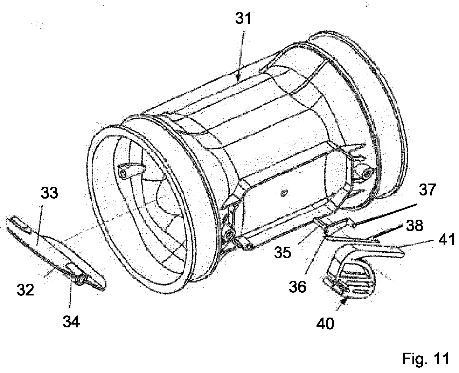

- Figur 11: eine Explosionsdarstellung der erfindungsgemässen Vorrichtung zum Regeln des Volumens eines strömenden Mediums;

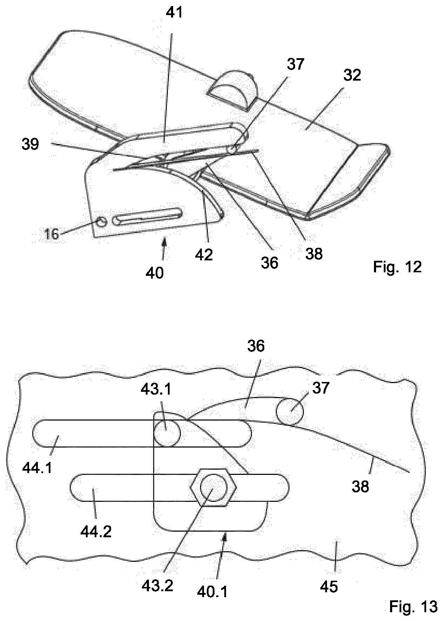

- Figur 12: eine perspektivische Ansicht von Teilen einer Regeleinheit für die Vorrichtung gemäss Figur 1;
- Figur 13: eine Draufsicht auf Teile eines weiteren Ausführungsbeispiels einer Regeleinheit für die Vorrichtung gemäss Figur 1.

### Ausführungsbeispiel

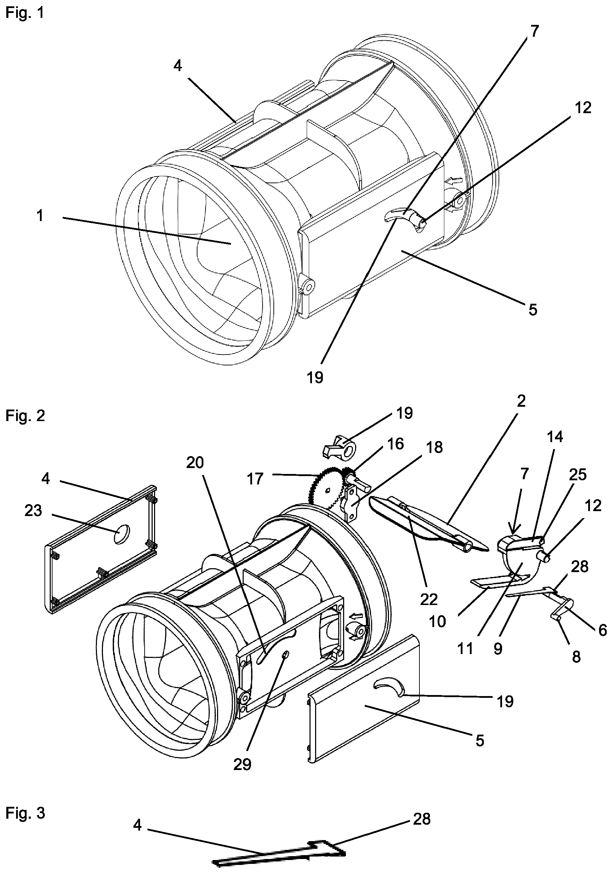

In den Figuren 1 und 2 ist ein Volumenstromregler mit einem Kanal 1 und einer Regelklappe 2 gezeigt, wobei die Regelklappe 2 in der Figur 2 besser zu erkennen ist. In dem Kanal 1 ist die Regelklappe 2 schwenkbar um eine Querachse 3 angeordnet, wobei die Querachse 3 über eine Blattfeder 9 vorgehaltert ist. Der Kanal 1 weist einerseits ein Federlagergehäuse auf, welches mittels eines Federlagerdeckels 5 und der Aussenfläche des Kanals 1 gebildet wird.

In dem Federlagergehäuse ist eine Federkraft-Regelungsmechanik 7 angeordnet, wobei die Querachse 3 einen Druckhebel 6 ausbildet, welcher mittels eines Kraftüberträger-Pins 8 auf die Blattfeder 9 der Federkraft-Regelungsmechanik 7 anliegend angeordnet ist, wobei die Federkraft-Regelungsmechanik 7 manuell verstellbar in dem Federlagergehäuse angeordnet ist.

In Figur 1 ist auf der einen Aussenseite des Kanals 1 der Federlagerdeckel 5 und auf der gegenüberliegenden Aussenseite des Kanals 1 der Gegenlagerdeckel 4 gezeigt. Der Kanal 1 bildet andernends ein Gegenlagergehäuse mittels des Gegenlagerdeckels 4 aus. In den Federlagerdeckel 5 ist eine teilkreisförmige Ausnehmung 19 eingelassen, durch welche ein Verstellerhebel 12 hindurchgreift. Der Verstellerhebel 12 ist als Teil der ebenfalls teilweise sichtbaren Federkraft-Regelungsmechanik 7 gezeigt.

In Figur 2 ist weiter zu erkennen, dass der Gegenlagerdeckel 4 einen Ausschnitt 23 aufweist. In zusammengebauter Lage greift ein Teil eines Verriegelungshebels 27 hindurch, sodass ein Nutzer den Verriegelungshebel 27 betätigen kann.

Weiter ist in Figur 2 gezeigt, dass das Gegenlagergehäuse 5 andernends des Kanals 1 und der Querachse 3 ein Zahnrad 16 aufweist, welches drehfest mit der Querachse 3 verbunden ist.

Das Zahnrad 16 greift in zusammengebauter Lage in ein zweites Zahnrad 17 ein. Das zweite Zahnrad 17 ist auf einen Rotationsdämpfer 18 aufgesetzt.

Das Zahnrad 16 oder das zweite Zahnrad 17 ist mittels des Verriegelungshebels 27 freigebbar oder drehverriegelbar ist, wobei der Verriegelungshebel 27 durch den Ausschnitt 23 des Gegenlagerdeckels 4 greift.

Der Kraftüberträger-Pin 8 ist durch die Federkraft-Regelungsmechanik 7 entlang der Blattfeder 9 positionsverstellbar ist.

In Figur 2 ist ausserdem gezeigt, dass die Querachse 3 einends den Druckhebel 6 radial zu der Querachse 3 ausbildet und der Druckhebel 6 den Kraftüberträger-Pin 8 axial versetzt zu der Querachse 3 ausbildet.

Die Regelungsklappe 2 weist neben der Querachse 3 einen Knick 22 auf.

Der Federlagerdeckel 5 weist einen teilkreisförmige Ausnehmung 19 auf. Ausserdem ist ein Durchgriff 29 im Bereich des Federlagergehäuses in der Aussenwand des Kanals 1 gezeigt, durch welche die Querachse 3 hindurchverläuft und in den radial zur Querachse 3 verlaufenden Druckhebel 6 übergeht, welcher wiederum andernends der Querachse 3 den Kraftüberträger-Pin 8 ausformt.

Weiter ist in der Aussenwand des Kanals 1 eine teilkreisförmige Kanalnut 20 eingelassen.

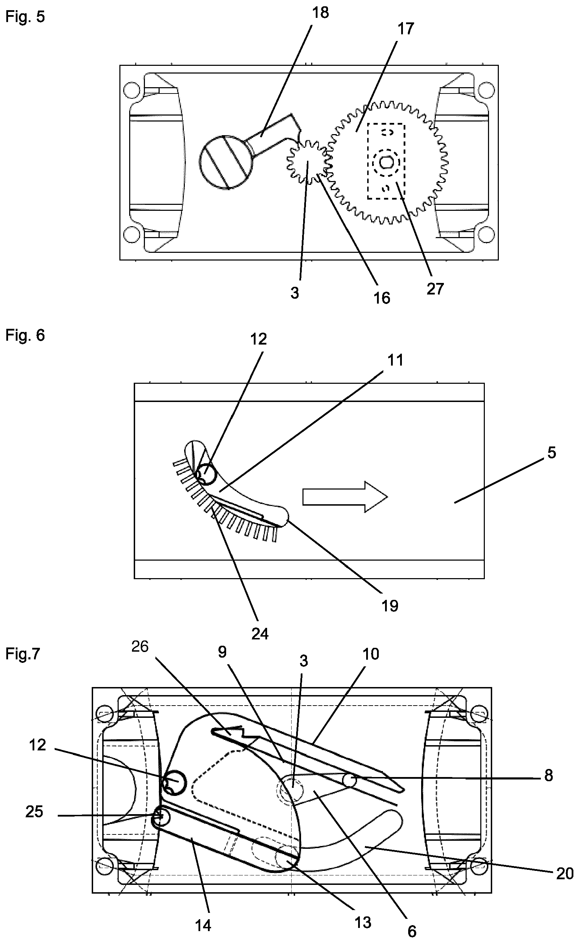

Auch ist die Federkraft-Regelungsmechanik 7 gezeigt, die aus einem Niederhalter 10 und einem Grundkörper 11 besteht, wobei die Blattfeder 9 in Ausgangslage parallel bis fast-parallel zu dem Niederhalter 10 und zwischen dem Niederhalter 10 und dem Grundkörper 11 angeordnet ist. Die Einzelheiten der Federkraft-Regelungsmechanik 7 sind in den Figuren 6 bis 10 gezeigt.

In Figur 3 ist eine vergrösserte Ansicht der Blattfeder 9 gezeigt. Die Blattfeder 9 bildet endseitig einem Haltebereich 28 aus. Die Blattfeder 9 weist eine von dem Haltebereich 28 weg sich verjüngende Trapezform auf. Dabei handelt es sich um im hier gezeigten Ausführungsbeispiel ein rechtwinkliges Trapez.

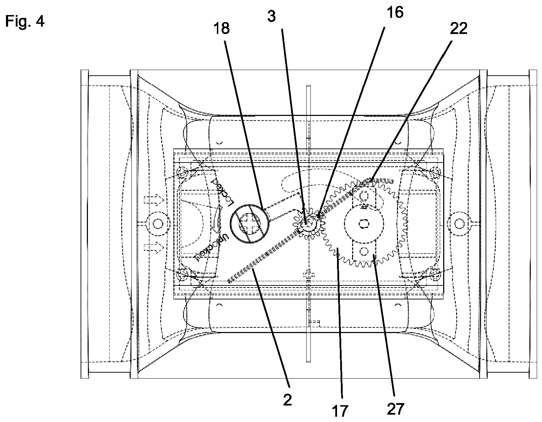

Figur 4 zeigt eine teilweise durchsichtige Darstellung einer Seitenansicht der Figur 1. Dort ist gut die Anordnung der Querachse 3, sowie die Regelklappe 2 und deren Knick 22 gezeigt. Weiter ist der Verriegelungshebel 18 in verriegeltem Zustand gezeigt. Dazu greift der Verriegelungshebel 18 in das Zahnrad 16 ein und sperrt daher die Querachse 3 und damit die Schwenkbarkeit der Regelklappe 2. Auch ist gut zu erkennen, wie das Zahnrad 16 in das zweite Zahnrad 17 greift, welches wiederum auf dem Rotationsdämpfer 27 angeordnet ist. 15. Die Regelklappe 2 weist den Knick 22 in Strömungsrichtung auf. In Strömungsrichtung bedeutet, dass der Knick 22 in Richtung der Zielrichtung der Strömung des Mediums, welche den Kanal 1 passiert.

In Figur 5 ist eine vergrösserte geöffnete Seitenansicht eines Gegenlagergehäuses gezeigt. Die zur Figur 4 gemachten Ausführungen gelten auch für die Figur 5. Insbesondere dann, wenn die gleichen Merkmale mit den gleichen Bezugsziffern versehen sind. Der zwischen dem zweiten Zahnrad 17 und der Aussenwand des Kanals 1 vorhandene Rotationsdämpfer 27 ist gestrichelt dargestellt.

In Figur 6 ist eine vergrösserte Seitenansicht des Federlagergehäuses gezeigt. Dort ist der Federlagerdeckel 5 mit der teilkreisförmigen Ausnehmung 19 gezeigt. Auf der Aussenseite, also der von dem Kanal 1 wegweisenden Seite des Federlagerdeckels 5 entlang der teilkreisförmigen Ausnehmung 19 eine Rasteranzeige 24 vorhanden. Auch ist in Einbaulage zu erkennen, wie der Verstellerhebel 12 durch die teilkreisförmige Ausnehmung 19 hindurchgreift und somit für einen Nutzer zur Verstellung zugänglich ist. Auch ist ein Teil des Grundkörpers 11 durch die teilkreisförmige Ausnehmung 19 hindurch in dem Federlagergehäuse sichtbar.

In Figur 7 ist eine geöffnete Seitenansicht des Federlagergehäuses aus Figur 6 gezeigt. Dort ist der Federlagerdeckel 5 aus Figur 6 entfernt. Daher ist gut zu erkennen, dass die Federkraft-Regelungsmechanik 7 in dem Federlagergehäuse angeordnet ist, wobei der Grundkörper 11 einerseits den Verstellerhebel 12 und anderseits eine Kanalnut-Feder 13 aufweist, wobei der Verstellerhebel 12 durch die teilkreisförmige Ausnehmung 19 des Federlagerdeckels 6 greift, wie es in Figur 6 gezeigt ist, und dabei die Kanalnut-Feder 13 gleichzeitig in die teilkreisförmige Kanalnut 20 der Aussenseite des Kanals 1 in dem Bereich des Federlagergehäuses greift.

Weiter ist der Kraftüberträger-Pin 8 zwischen der Blattfeder 9 und dem Niederhalter 10 angeordnet.

Auch ist gut zu erkennen, dass der Grundkörper 11 einerseits einen Rasterarm 14 ausbildet, wobei der Rasterarm 14 mit einer Rastierung 15 auf einer Innenseite des Federlagerdeckels 6 zusammenwirkt. Der Rasterarm 14 bildet eine Rasterhebung 25 parallel verlaufend, aber weniger bauhoch zum Verstellerhebel 12 aus. Zusammenwirken bedeutet dabei, dass beim Verstellen der Federkraft-Regelungsmechanik 7 mittels des Verstellerhebels 12 die Kanalnut-Feder 13 in der teilkreisförmigen Kanalnut 20 verschoben wird, wobei dadurch wiederum gleichzeitig der Kraftüberträger-Pin 8 entlang der Blattfeder 9 hin zu einer Federaufnahme 26 oder weg von der Federaufnahme 26 verschoben wird, womit auch gleichzeitig die aufzubringende Federkraft der Blattfeder 9 und die dazugehörige Position der Regelungsklappe 2 eingestellt wird.

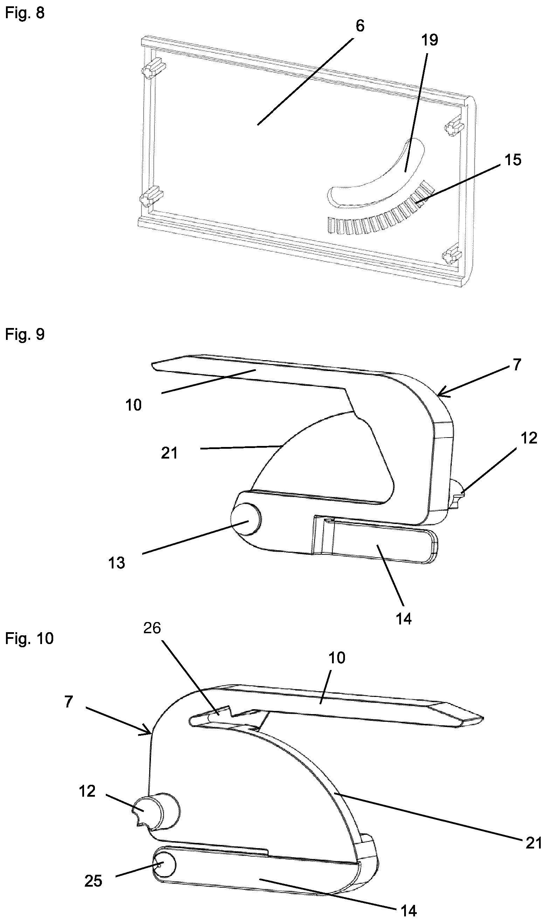

**In** Figur 8 ist die Innenfläche der Federlagedeckels 5 gezeigt. Die Innenfläche ist diejenige Fläche, welche im zusammengebauten Zustand zu dem Kanal 1 hin weist. Dort ist die parallel zur teilkreisförmigen Ausnehmung 19 verlaufende Rastierung 15 gegeben.

**In** den Figuren 9 und 10 sind nochmals vergrösserte Ansichten der Federkraft-Regelungsmechanik 7 gezeigt. Es wird auf eine Wiederholung der bereits beschriebenen Merkmale in den vorigen Figuren verzichtet. Insbesondere, wenn die gleichen Merkmale identischen Bezugszeichen aufweisen, gelten die Ausführungen auch für die Figuren 9 und 10.

Zusätzlich zu den bereits beschriebenen Merkmalen aus den vorigen Figuren wird hier nochmals darauf hingewiesen, dass der Grundkörper 11 auf seiner zu der Blattfeder 9 weisenden Stirnfläche einen Federanschlagbogen 21 ausbildet. Auch ist insbesondere darauf hingewiesen, dass der Rasterarm 14 in Figur 9 eine Verjüngung aufweist, um eine Rasterverstellung zu ermöglichen.

Eine erfindungsgemässe Vorrichtung zum Regeln des Volumens eines strömenden Mediums weist ein Kanal 31 auf, in dem das strömende Medium geführt wird. Zum Regeln des Volumens des strömenden Mediums befindet sich in dem Kanal eine Regelklappe 32, die um eine Querachse 33 drehbar angeordnet ist. Zumindest ein Ende der Querachse 33 ist als Hülse 34 ausgebildet.

In die Hülse 34 ist ein Bolzen 35 einsetzbar, der über ein Schwert 36 mit einem Hebelchen 37 verbunden ist.

In Figur 2 ist erkennbar, dass dieses Hebelchen 37 auf eine Feder 38 drückt, die in einen Spalt 39 eines Verstellblocks 40 eingesetzt ist. Dabei wird die Feder 38 von einem Niederhalter 41 übergriffen, so dass das Hebelchen 37 zwischen dem Niederhalter 41 und der Feder 38 geführt ist. Dies ist aber nur eine von vielen Möglichkeiten. Bevorzugt wird auch eine Schnappverbindung der Feder 38 mit dem Verstellblock 40.

Unterhalb der Feder 38 weist der Verstellblock 40 eine Rundung 42 auf, welche von der Feder 38 abgerollt werden kann, wodurch die Spannung der Feder 38 verändert wird.

Der Verstellblock 40 ist um eine Achse 43 drehbar, so dass bereits dadurch eine Vorspannung der Feder 38 gegenüber dem Hebelchen 37 bestimmt werden kann. Dieser Stellung des Verstellblocks 40 kann auch eine Skala zugeordnet sein.

In Figur 3 wird eine andere Möglichkeit des Verstellblocks 40 gezeigt, wobei hier der Verstellblock 40.1 mit zwei beabstandeten Bolzen 43.1 und 43.2 in zwei Kulissen 44.1 und 44.2 einer Gehäuseplatte 45 geführt ist. Durch die Entfernung des Bolzens 43.1 von dem Hebelchen 37 wird die Spannung der Feder 38 bestimmt. Dabei liegt natürlich auch im Rahmen der Erfindung, dass beispielsweise die Kulisse 44.1 gebogen ist und sich in der Gehäuseplatte 45 befindet, während die andere Kulisse 44.2 eine gerade Form aufweist und sich im Verstellblock 40.1 befindet. Hier sind natürlich noch weitere Ausgestaltungen denkbar.

### Bezugszeichenliste

| | | | |
|---|---|---|---|
| 1 | Kanal | 34 | Hülse |
| 2 | Regelklappe | 35 | Bolzen |
| 3 | Querachse | 36 | Schwert |
| 4 | Gegenlagerdeckel | 37 | Hebelchen |
| 5 | Federlagerdeckel | 38 | Feder |
| 6 | Druckhebel | 39 | Spalt |
| 7 | Federkraft-Regelungsmechanik | 40 | Verstellblock |
| 8 | Kraftüberträger-Pin | 41 | Niederhalter |
| 9 | Blattfeder | 42 | Rundung |
| 10 | Niederhalter | 43 | Achse |
| 11 | Grundkörper | 44 | Kulisse |
| 12 | Verstellerhebel | 45 | Gehäuseplatte |
| 13 | Kanalnut-Feder | | |
| 14 | Rasterarm | | |
| 15 | Rastierung | | |
| 16 | Zahnrad | | |
| 17 | Zweites Zahnrad | | |
| 18 | Verriegelungshebel | | |
| 19 | Teilkreisförmige Ausnehmung | | |
| 20 | Kanalnut | | |
| 21 | Federanschlagbogen | | |
| 22 | Knick | | |
| 23 | Ausschnitt | | |
| 24 | Rasteranzeige | | |
| 25 | Rasterhebung | | |
| 26 | Federaufnahme | | |
| 27 | Rotationsdämpfer | | |
| 28 | Haltebereich | | |
| 29 | Durchgriff | | |
| 30 | | | |
| 31 | Kanal | | |
| 32 | Regelklappe | | |
| 33 | Queachse | | |

## Patentansprüche

1. Volumenstromregler mit einem Kanal (1) und einer Regelklappe (2), wobei die Regelklappe (2) in dem Kanal (1) schwenkbar um eine Querachse (3) angeordnet ist, wobei die Querachse (3) über eine Feder vorgehaltert ist, der Kanal (1) einerseits ein Federlagergehäuse mit einem Federlagerdeckel (5) aufweist, wobei in dem Federlagergehäuse eine Federkraft-Regelungsmechanik (7) angeordnet ist, wobei die Querachse (3) einen Druckhebel (6) ausbildet, welcher mittels eines Kraftüberträger-Pins (8) auf eine Blattfeder (9) der Federkraft-Regelungsmechanik (7) anliegend angeordnet ist, wobei die Federkraft-Regelungsmechanik (7) manuell verstellbar in dem Federlagergehäuse angeordnet ist,
**dadurch gekennzeichnet,**
**dass** die Federkraft-Regelungsmechanik (7) aus einem Niederhalter (10) und einem Grundkörper (11) besteht, wobei die Blattfeder (9) in Ausgangslage parallel bis fast-parallel zu dem Niederhalter (10) und zwischen dem Niederhalter (10) und dem Grundkörper (11) angeordnet ist, wobei der Kraftüberträger-Pin (8) zwischen der Blattfeder (9) und dem Niederhalter (10) angeordnet ist, wobei der Grundkörper (11) einerseits einen Verstellerhebel (12) und anderseits eine Kanalnut-Feder (13) aufweist, wobei der Verstellerhebel (12) durch eine teilkreisförmige Ausnehmung (19) des Federlagerdeckels (6) greift und die Kanalnut-Feder (13) in eine teilkreisförmige Kanalnut (20) auf einer Aussenseite des Kanals (1) in dem Federlagergehäuse greift, wobei der Grundkörper (11) auf seiner zu der Blattfeder (9) weisenden Stirnfläche einen Federanschlagbogen (21) ausbildet, wobei der Grundkörper (11) einerseits einen Rasterarm (14) ausbildet, wobei der Rasterarm (14) mit einer Rastierung (15) auf einer Innenseite des Federlagerdeckels (6) zusammenwirkt, wobei der Rasterarm (14) eine Rasterhebung (25) parallel zum Verstellerhebel (12) ausbildet.

2. Volumenstromregler nach Anspruch 1, **dadurch gekennzeichnet, dass** der Kraftüberträger-Pin (8) durch die Federkraft-Regelungsmechanik (7) entlang der Blattfeder (9) positionsverstellbar ist.

3. Volumenstromregler nach Anspruch 1 oder 2, **dadurch gekennzeichnet, dass** die Blattfeder (9) eine von einem Haltebereich (28) weg verjüngende Form aufweist.

4. Volumenstromregler nach einem der Ansprüche 1 bis 3, **dadurch gekennzeichnet, dass** die Querachse (3) einends den Druckhebel (6) radial zu der Querachse (3) ausbildet und der Druckhebel (6) den Kraftüberträger-Pin (8) axial versetzt zu der Querachse (3) ausbildet.

5. Volumenstromregler nach einem der vorigen Ansprüche, **dadurch gekennzeichnet, dass** der Kanal (1) andernends ein Gegenlagergehäuse mittels eines Gegenlagerdeckels (4) ausbildet.

6. Volumenstromregler nach Anspruch 5, **dadurch gekennzeichnet, dass** das Gegenlagergehäuse (5) andernends ein Zahnrad (16) aufweist, welches drehfest mit der Querachse (3) verbunden ist.

7. Volumenstromregler nach Anspruch 6, **dadurch gekennzeichnet, dass** das Zahnrad (16) in ein zweites Zahnrad (17) greift, wobei das zweite Zahnrad (17) auf einen Rotationsdämpfer (18) aufgesetzt ist.

8. Volumenstromregler nach Anspruch 7, **dadurch gekennzeichnet, dass** das Zahnrad (16) oder das zweite Zahnrad (17) mittels eines Verriegelungshebels (27) freigebbar oder drehverriegelbar ist, wobei der Verriegelungshebel (27) durch einen Ausschnitt (23) des Gegenlagerdeckels (4) greift.

9. Volumenstromregler nach einem der vorigen Ansprüche, **dadurch gekennzeichnet, dass** die Regelklappe (2) einen Knick (22) in Strömungsrichtung aufweist.

## Claims

1. Flow rate controller comprising a duct (1) and a control flap (2), wherein the control flap (2) is pivotably arranged in the duct (1) about a transverse axis (3), wherein the transverse axis (3) is pretensioned by a spring, the duct (1) having, on one side, a spring bearing housing with a spring bearing cover (5), wherein a spring force adjustment mechanism (7) is arranged in the spring bearing housing, wherein the transverse axis (3) forms a pressure lever (6), which is arranged so as to bear via a force-transmitting pin (8) against a leaf spring (9) of the spring force adjustment mechanism (7), wherein the spring force adjustment mechanism (7) is manually adjustable within the spring bearing housing,
**characterized in that**
the spring force adjustment mechanism (7) consists of a retainer (10) and a base body (11), wherein the leaf spring (9) is arranged, in its initial position, parallel or nearly parallel to the retainer (10) and between the retainer (10) and the base body (11), wherein the force-transmitting pin (8) is arranged between the leaf spring (9) and the retainer (10), wherein the base body (11) comprises, on one side, an adjustment lever (12) and, on the other side, a channel groove spring (13), wherein the adjustment lever (12) engages through a semicircular recess (19) of the spring bearing cover (6) and the channel groove spring (13) engages into a semicircular channel groove (20) on an outer side of the duct (1) within the spring bearing housing, wherein the base body (11) forms a spring stop arc (21) on its end face facing the leaf spring (9), wherein the base body (11) forms, on one side, a ratchet arm (14), wherein the ratchet arm (14) cooperates with a latching structure (15) on an inner side of the spring bearing cover (6), and wherein the ratchet arm (14) forms a ratchet lift (25) parallel to the adjustment lever (12).

2. Flow rate controller according to claim 1, **characterized in that** the force-transmitting pin (8) is positionally adjustable along the leaf spring (9) by means of the spring force adjustment mechanism (7).

3. Flow rate controller according to claim 1 or 2, **characterized in that** the leaf spring (9) has a shape that tapers away from a holding region (28).

4. Flow rate controller according to any one of claims 1 to 3, **characterized in that** the transverse axis (3) forms, at one end, the pressure lever (6) radially to the transverse axis (3), and the pressure lever (6) positions the force-transmitting pin (8) axially offset from the transverse axis (3).

5. Flow rate controller according to any one of the preceding claims, **characterized in that** the duct (1) forms, at its other end, a counter bearing housing by means of a counter bearing cover (4).

6. Flow rate controller according to claim 5, **characterized in that** the counter bearing housing (5) comprises, at the other end, a gear wheel (16) which is rotationally fixedly connected to the transverse axis (3).

7. Flow rate controller according to claim 6, **characterized in that** the gear wheel (16) engages with a second gear wheel (17), wherein the second gear wheel (17) is mounted on a rotation damper (18).

8. Flow rate controller according to claim 7, **characterized in that** the gear wheel (16) or the second gear wheel (17) is releasable or lockable in rotation by means of a locking lever (27), wherein the locking lever (27) engages through a cut-out (23) of the counter bearing cover (4).

9. Flow rate controller according to any one of the preceding claims, **characterized in that** the control flap (2) has a bend (22) in the flow direction.

## Revendications

1. Régulateur de débit volumique, présentant un canal (1) et un clapet de régulation (2),
dans lequel
le clapet de régulation (2) est disposé dans le canal (1) de manière à pouvoir pivoter autour d'un axe transversal (3),
l'axe transversal (3) est précontraint par un ressort,
le canal (1) présente, sur un côté, un boîtier de palier à ressort muni d'un couvercle de palier à ressort (5),
un mécanisme de régulation de force de ressort (7) est disposé dans le boîtier de palier à ressort,
l'axe transversal (3) forme un levier de pression (6) qui est disposé en appui sur un ressort à lame (9) du mécanisme de régulation de force de ressort (7) au moyen d'une broche de transmission de force (8),
le mécanisme de régulation de force de ressort (7) est disposé dans le boîtier de palier à ressort de manière à pouvoir être réglé manuellement,
**caractérisé en ce que**
le mécanisme de régulation de force de ressort (7) est constitué d'un organe de maintien (10) et d'un corps de base (11),
le ressort à lame (9) est disposé, en position initiale, parallèlement ou presque parallèlement à l'organe de maintien (10) et entre l'organe de maintien (10) et le corps de base (11),
la broche de transmission de force (8) est disposée entre le ressort à lame (9) et l'organe de maintien (10),
le corps de base (11) comprend un levier de réglage (12), d'une part, et un ressort de rainure de canal (13), d'autre part,
le levier de réglage (12) s'engage à travers un évidement (19) en forme de cercle partiel du couvercle de palier à ressort (6), et le ressort de rainure de canal (13) s'engage dans une rainure de canal (20) en forme de cercle partiel sur une face extérieure du canal (1) dans le boîtier de palier à ressort,
le corps de base (11) forme, sur sa face frontale tournée vers le ressort à lame (9), un arc de butée de ressort (21),
le corps de base (11) forme, sur un côté, un bras d'enclenchement (14),
le bras d'enclenchement (14) coopère avec des crans (15) sur une face intérieure du couvercle de palier à ressort (6),
le bras d'enclenchement (14) forme une bosse d'enclenchement (25) parallèle au levier de réglage (12).

2. Régulateur de débit volumique selon la revendication 1,
**caractérisé en ce que** la broche de transmission de force (8) est réglable en position le long du ressort à lame (9) par le mécanisme de régulation de force de ressort (7).

3. Régulateur de débit volumique selon la revendication 1 ou 2,
**caractérisé en ce que** le ressort à lame (9) présente une forme qui se rétrécit en s'éloignant d'une zone de retenue (28).

4. Régulateur de débit volumique selon l'une des revendications 1 à 3,
**caractérisé en ce que** l'axe transversal (3) forme, à une extrémité, le levier de pression (6) radialement par rapport à l'axe transversal (3), et le levier de pression (6) forme la broche de transmission de force (8) axialement décalée par rapport à l'axe transversal (3).

5. Régulateur de débit volumique selon l'une des revendications précédentes,
**caractérisé en ce que** le canal (1) forme, à son autre extrémité, un boîtier de contre-palier au moyen d'un couvercle de contre-palier (4).

6. Régulateur de débit volumique selon la revendication 5,
**caractérisé en ce que** le boîtier de contre-palier (5) présente, à son autre extrémité, une roue dentée (16) reliée solidairement en rotation à l'axe transversal (3).

7. Régulateur de débit volumique selon la revendication 6,
**caractérisé en ce que** la roue dentée (16) s'engrène dans une deuxième roue dentée (17), la deuxième roue dentée (17) étant rapportée sur un amortisseur de rotation (18).

8. Régulateur de débit volumique selon la revendication 7,
**caractérisé en ce que** la roue dentée (16) ou la deuxième roue dentée (17) peut être libérée ou verrouillée en rotation au moyen d'un levier de verrouillage (27), le levier de verrouillage (27) s'engageant à travers une découpe (23) du couvercle de contre-palier (4).

9. Régulateur de débit volumique selon l'une des revendications précédentes,
**caractérisé en ce que** le clapet de régulation (2) présente un pli (22) dans le sens de l'écoulement.
